# EUROPEAN PATENT APPLICATION

(11) **EP 1 898 339 A1**
(43) Date of publication of application: **12.03.2008**
(21) Application number: 06767631.2
(22) Date of filing: 29.06.2006
(51) Int. Cl.: G06K 9/46, G06K 9/68, G06F 17/30

(54) **RETRIEVAL SYSTEM AND RETRIEVAL METHOD**

(30) Priority: 30.06.2005 JP 2005192808
(71) Applicant: Olympus Corporation, Tokyo 151-0072 (JP)
(72) Inventor: SHIBASAKI, Takao, Tokyo 192-8512 (JP); AKATSUKA, Yuichiro, Tokyo 192-8512 (JP); FUKUYAMA, Naohiro, Tokyo 192-8512 (JP)
(74) Representative: von Hellfeld, Axel
(86) International application number: PCT/JP2006/313014
(87) International publication number: WO 2007/004520

(57) **Abstract**

On the basis of image data obtained by image acquisition, a plurality of image data are retrieved from a database (20), which constitutes a total feature value DB, by template matching using an outline template (21). A single or a plurality of images are retrieved from the retrieved plurality of image data by template matching by using a detail template (22) having a narrower region than the outline template (21) and a high resolution.

## Description

### Technical Field

The present invention relates to a retrieval system and a retrieval method for retrieving image data from a database.

### Background Art

In recent years, it has become widely popular to printout and enjoy image data which is acquired by digital cameras, like images acquired by silver-chloride film cameras.

In a case where image data, which has already been printed out, is to be printed once again, such reprinting is very time-consuming since the user has to retrieve the image data from an image storage medium by referring to relevant information (e.g. file name, date of image acquisition) of the image data.

Jpn. Pat. Appln. KOKAI Publication No. 2001-88374, for instance, proposes a storage printer which stores printed-out image data and enables a keyword search or the like, with a view to easily retrieving once printed-out image data from an image data supply source.

### Disclosure of Invention

In the storage printer disclosed in Jpn. Pat. Appln. KOKAI Publication No. 2001-88374, however, retrieval by keyword classification is executed, and thus the user is required to perform classification in advance, which is time-consuming.

In addition, in the case where target image data is retrieved from a large population by template matching, if a high-resolution template is directly applied in order to improve a recognition ratio, the time for arithmetic operations tends to increase.
Thus, a method of realizing high-speed operations is needed.

The present invention has been made in consideration of the above problem, and the object of the invention is to provide a retrieval system and a retrieval method, which can easily and quickly retrieve image data from a database.

According to an aspect of a retrieval system of the invention, there is provided a retrieval system characterized by comprising:
image input means for inputting an image; and
image retrieval means for retrieving, on the basis of the image input by the image input means, a plurality of images from a database by template matching using a first template, and retrieving a single or a plurality of images from the retrieved plurality of images by template matching by using a second template having a narrower region than the first template and a high resolution.

According to another aspect of a retrieval system of the invention, there is provided a retrieval system characterized by comprising:
image input means for inputting an image; and
image retrieval means for retrieving, on the basis of the image input by the image input means, a single or a plurality of images from a database by template matching using a template with a partly enhanced resolution.

According to an aspect of a retrieval method of the invention, there is provided a retrieval method characterized by comprising:
inputting an image; and
retrieving, on the basis of the input mage, a plurality of images from a database by template matching using a first template; and
retrieving a single or a plurality of images from the retrieved plurality of images by template matching by using a second template having a narrower region than the first template and a high resolution.

According to another aspect of a retrieval method of the invention, there is provided a retrieval method characterized by comprising:
inputting an image; and
retrieving, on the basis of the input image, a single or a plurality of images from a database by template matching using a template with a partly enhanced resolution.

### Brief Description of Drawings

FIG. 1 schematically shows the structure of a retrieval system according to a first embodiment of the present invention;
FIG. 2 is a view for explaining an outline template;
FIG. 3 is a view for explaining a detail template;
FIG. 4 is a view for explaining the positional relationship between original image data and the outline template and detail template;
FIG. 5 is a block diagram of the retrieval system according to the first embodiment;
FIG. 6 is a flowchart illustrating the operation of the retrieval system according to the first embodiment;
FIG. 7 is a flowchart illustrating the details of a printout cutting-out process;
FIG. 8 is a flowchart illustrating the details of a matching process with DB;
FIG. 9 shows a display screen of a display unit of a digital camera in a case where only one image candidate is displayed;
FIG. 10 shows the display screen in a case where nine image candidates are displayed;
FIG. 11 is a view for explaining a detail template with attention paid to a central part of image data;
FIG. 12 is a view for explaining detail templates which are arranged in a distributed fashion within an image;
FIG. 13 is a view for explaining a detail template with a region of interest being set at a focal position at the time of acquiring original image data;
FIG. 14 is a view for explaining a composite template, with an outline template and a detail template being included in the same image;
FIG. 15 shows a 16 × 16 template, a 128 × 128 template, and a composite template in which these templates are combined;
FIG. 16 is a view for explaining a detail template which is created in the same region as an outline template;
FIG. 17 is a flowchart illustrating a method of creating a feature value database;
FIG. 18 is a flowchart illustrating another example of the method of creating the feature value database;
FIG. 19 is a flowchart illustrating still another example of the method of creating the feature value database;
FIG. 20 is a flowchart illustrating still another example of the method of creating the feature value database;
FIG. 21 is a block diagram of a retrieval system according to a second embodiment of the invention;
FIG. 22 is a flowchart illustrating the operation of the retrieval system according to the second embodiment;
FIG. 23 is a flowchart illustrating the details of an acquire image of printout process;
FIG. 24 is a flowchart illustrating a method of creating a feature value database;
FIG. 25 shows an example in which a guidance function for guidance to an exemplar image at a time of, e.g. image acquisition is applied to a digital camera;
FIG. 26 shows an example of display of guidance;
FIG. 27 shows another example of display of guidance; and
FIG. 28 is a flowchart illustrating the operation of the retrieval system according to a third embodiment of the present invention.

### Best Mode for Carrying Out the Invention

Best modes for carrying out the present invention will now be described with reference to the accompanying drawings.

### [First Embodiment]

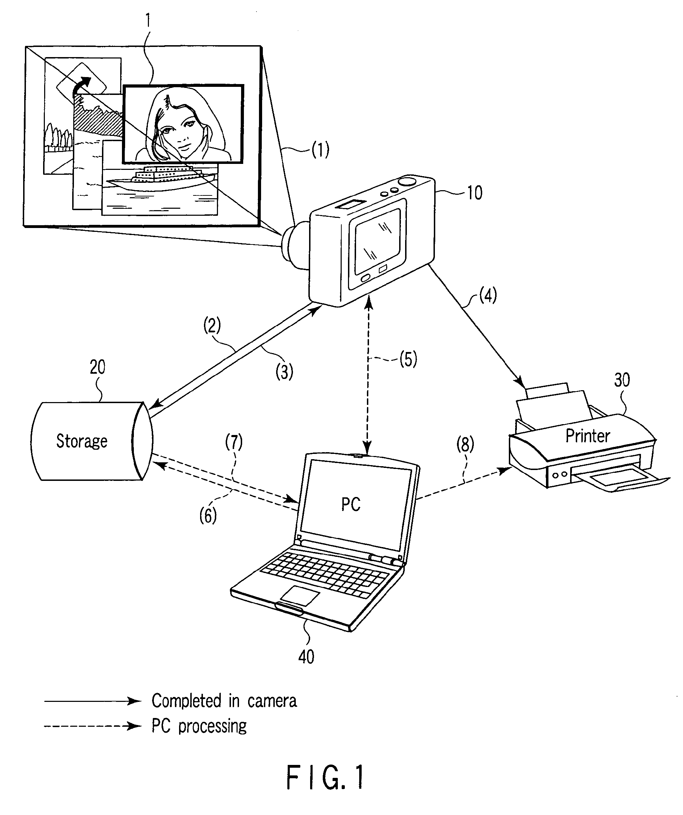

As shown in FIG. 1, the retrieval system according to a first embodiment of the present invention includes a digital camera 10, a storage 20, and a printer 30. The storage 20 stores multiple items of image data. The printer 30 prints image data stored in the storage 20.

For example, the storage 20 is a memory detachable from or built in the digital camera 10. The printer 30 prints out image data stored in the memory, i.e., the storage 20, in accordance with a printout instruction received from the digital camera 10. Alternately, the storage 20 is connected to the digital camera 10 through connection terminals, cable, or wireless/wired network, or alternately, can be a device mounting a memory detached from the digital camera 10 and capable of transferring image data. In this case, the printer 30 can be of the type that connected to or is integrally configured with the storage 20 and that executes printout operation in accordance with a printout instruction received from the digital camera 10.

The storage 20 further includes functionality of a database from which image data is retrievable in accordance with the feature value. Specifically, the storage 20 configures a feature value database (DB) containing feature value data (template) sets created from digital data of original images.

In this case, the feature value database includes a total feature value database in which outline templates, which are first templates, are registered, and a detail feature value database in which detail templates, which are second templates, are registered. The feature value may be based on relative density of divisional areas in the image data corresponding to a predetermined resolution, that is, small regions divided by a predetermined lattice, or may be based on, e.g. a Fourier transform value of each divisional area.

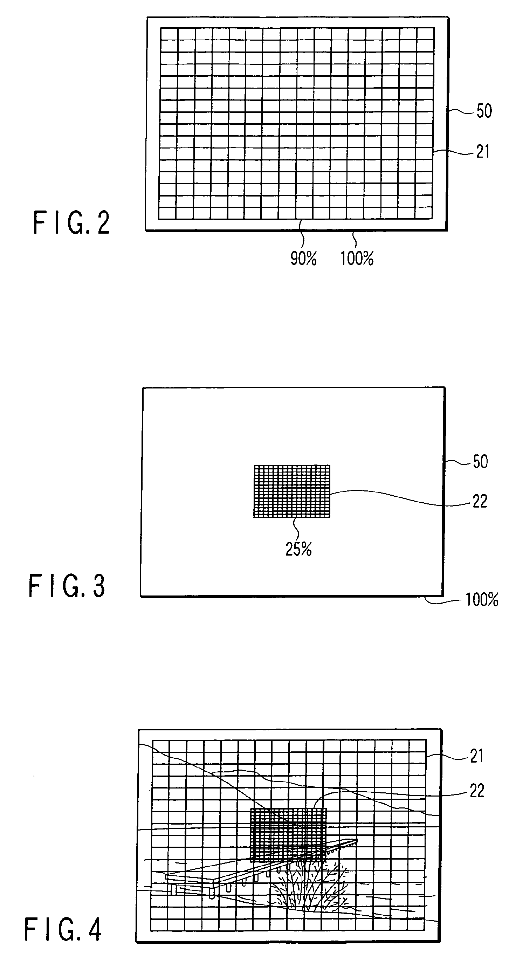

As shown in FIG. 2, an outline template 21 is obtained by extracting feature value data of a nearly entire region (e.g. about 90%) of the whole (100%) of image data 50 with a relatively rough resolution (divisional area). As shown in FIG. 3, a detail template 22 is obtained by extracting feature value data of a central region (e.g. about 25% in the central region) of image data 50 with a higher resolution than the resolution of the outline template 21. FIG. 4 shows the positional relationship between original image data and the outline template 21 and detail template 22.

The retrieval system thus configured performs operation as follows.
(1) First, the digital camera 10 acquires an image of a photographic subject including a retrieval source printout 1 once printed out by the printer 30. Then, a region corresponding to the image of the retrieval source printout 1 is extracted from the acquired image data, and a feature value of the extracted region is extracted.
(2) Then, the digital camera 10 executes template matching process of the extracted feature value with the outline templates 21 and the detail templates 22 which are stored in the storage 20.
(3) As a consequence, the digital camera 10 reads image data corresponding to matched template from the storage 20 as original image data of the retrieval source printout 1.
(4) Thereby, the digital camera 10 is able to again print out the read original image data with the printer 30.

The retrieval source printout 1 can use not only a printout having been output in units of one page, but also an index print having been output to collectively include a plurality of demagnified images. This is because it is more advantageous in cost and usability to select necessary images from the index print and to copy them.

The retrieval source printout 1 can be a printout output from a printer (not shown) external of the system as long as it is an image of which original image data exists in the feature value data base.

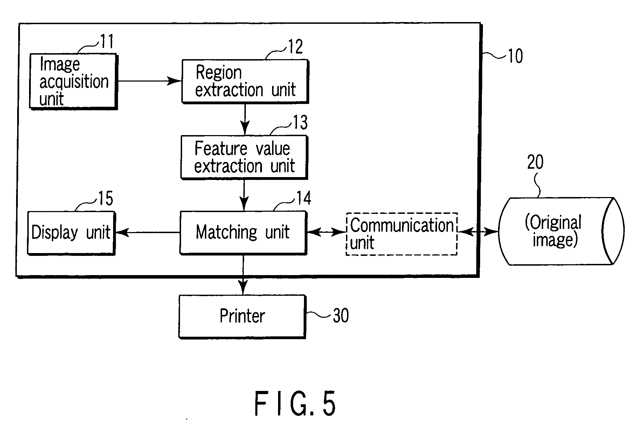

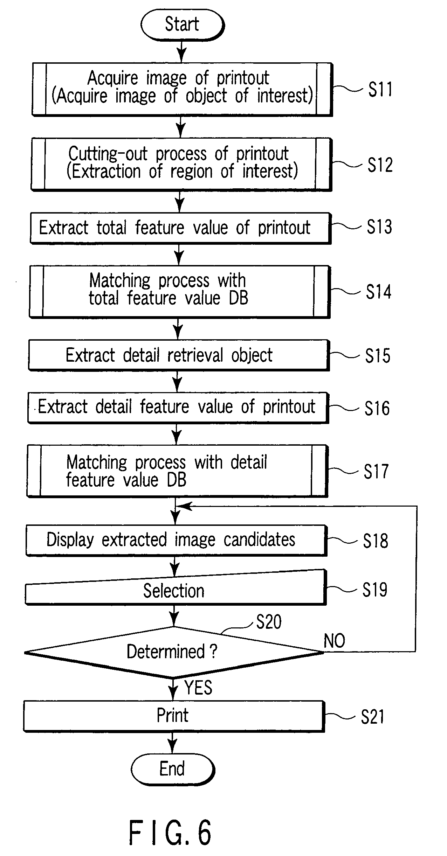

The retrieval system of the first embodiment will be described in more detail with reference to a block diagram of configuration shown in FIG. 5 and an operational flowchart shown in FIG. 6. The digital camera 10 has a retrieval mode for retrieving already-acquired image data in addition to the regular imaging mode. The operational flowchart of FIG. 6 shows the process in the retrieval mode being set.

Specifically, after setting the retrieval mode, the user acquires an image of a retrieval source printout 1, re-printout of which is desired, by an image acquisition unit 11 of the digital camera 10 in the state in which the printout 1 is placed on a table or attached to the wall, in such a manner that there is no missing portion of at least the retrieval source printout 1 (step S11).

Then, in the digital camera 10, a region extraction unit 12 executes a printout cutting-out process for specifying an image of the retrieval source printout 1 from the image data that is acquired by the image acquisition unit 11, and extracting the region of this image (step S12).

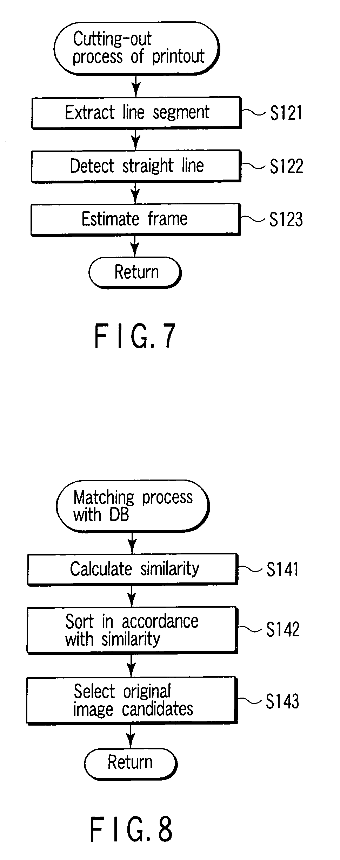

In the printout cutting-out process, as shown in FIG. 7, line segments in the acquired image data are detected (step S121), and straight lines are detected from the detected line segments (step S122). A frame which is formed of four detected straight lines is estimated (step S123). In other words, a region of interest, which is surrounded by the four sides, is found out from the acquired image data. If there are a plurality of regions each surrounded by four sides, a part with a maximum area may be extracted as a region of interest, or a region of interest may be specified on the basis of the vertical/horizontal ratio of the rectangle. In a rare case, the retrieval source printout 1 itself may be distorted in the acquired image data and, as a result, may not be specified as a region surrounded by four sides. In this case, it may be effective to execute a process of recognizing, as a tolerable region, a region in which some of the four sides are formed of gentle arcs. The present process includes a process of normalizing, after extracting the region which is regarded as the retrieval source printout 1, this image data region by affine transform or the like.

Subsequently, a feature value extraction unit 13 executes a total feature value extraction process for extracting a feature value from the entire image data of a region of interest that is specified/extracted by the region extraction unit 12 (step S13). Thereafter, a matching unit 14 executes a matching process with the total feature value DB for comparing the total feature value data, which is extracted by the feature value extraction unit 13, with the total feature value database which is constructed in the storage 20 and in which the outline templates 21 are registered, and successively extracting data with high similarity (step S14).

More specifically, as shown in FIG. 58 the total feature value DB-matching process is carried out as follows. First, similarities with respective outline template 21 is calculated (step S141), and feature value templates are sorted in accordance with the similarities (step S142). Then, original image candidates are selected in accordance with the similarities (step S143). The selection can be done such that either threshold values are set or high order items are specified in the order of higher similarities. In either way, two methods are available, one for selecting one item with the highest similarity and the other for selecting multiple items in the order from those having relatively higher similarities.

Then, the region extraction unit 12 extracts, as detail search object image data, image data of a detail search object region, that is, a central region of the region of interest in this example, from the image data of the above-described specified/extracted entire region of interest (step S15). The feature value extraction unit 13 executes a detail feature value extraction process for extracting a feature value from the detail search object image data that is extracted by the region extraction unit 12 (step S16). The matching unit 14 compares the extracted detail feature value data with the detail feature value database which is constructed in the storage 20 and in which the detail templates 22 are registered, and successively extracts data with high similarity (step S17). In this case, however, template matching is not executed with all the detail templates 22 registered in the detail feature value database. The template matching is executed only with detail templates 22 corresponding to a plurality of original image candidates which are extracted by the matching process with the total feature value DB in step S14. Thus, it should suffice to execute only a minimum necessary amount of the template matching process with the detail templates 22, which requires a length of process time because of high resolution. In setting a reference for the extraction in the matching process with the total feature value DB in step S14, it is possible to adopt a method in which a threshold is set for the similarity or a method in which upper 500 data are fixedly selected.

If the image data with high similarity are extracted as original image candidates in the matching process with the detail feature value DB, the image data of the extracted original image candidates are read out of the storage 20 and displayed as image candidates to be extracted (step S18), and the selection by the user is accepted (step S19).

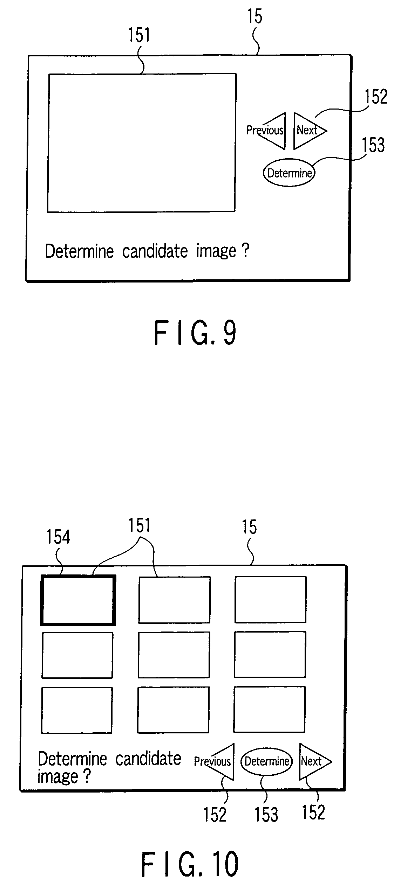

FIG. 9 shows a display screen of the display unit 15 in the event of displaying only one image candidate. The display screen has "PREVIOUS" and "NEXT" icons 152 and a "DETERMINE" icon 153 on a side of a display field of an image candidate 151. The "PREVIOUS" and "NEXT" icons 152 represent a button that is operated to specify display of another image candidate. The "DETERMINE" icon 153 represents a button that is operated to specify the image candidate 151 as desired image data. The "PREVIOUS" and "NEXT" icons 152 respectively represent left and right keys of a so-called four direction arrow key ordinarily provided in the digital camera 10, and the "DETERMINE" icon 153 represents an enter key provided in the center of the four direction arrow key.

In the event that the four direction arrow key, which corresponds to the "PREVIOUS" or "NEXT" icon 152 (step S20), is depressed, the process returns to step S18, at which the image candidate 151 is displayed. In the event that the enter key, which corresponds to the "DETERMINE" icon 153, is depressed (step S20), the matching unit 14 sends to the connected printer 30 original image data that corresponds to the image candidate 151 stored in the storage 20, and the image data is again printed out (step S21). When the storage 20 is not connected to the printer 30 through a wired/wireless network, the process of performing predetermined marking, such as additionally writing a flag, is carried out on the original image data corresponding to the image candidate 151 stored in the storage 20. Thereby, the data can be printed out by the printer 30 capable of accessing the storage 20.

In step S18 of displaying the image candidate, a plurality of candidates can be displayed at one time. In this case, the display unit 15 ordinarily mounted to the digital camera 10 is, of course, of a small size of several inches, such that displaying of four or nine items is appropriate for use. FIG. 10 is view of a display screen in the event of displaying nine image candidates 151. In this case, a bold-line frame 154 indicating a selected image is moved in response to an operation of a left or right key of the four direction arrow keys, respectively, corresponding to the "PREVIOUS" or "NEXT" icon 152. Although specifically not shown, the arrangement may be such that the display of nine image candidates 151 is shifted, that is, so-called page shift is done, to a previous or next display of nine image candidates by operating an up or down key of the four direction arrow key.

According to the present embodiment, quality (satisfaction level) of the retrieval result of the original image data and an appropriate retrieval time period are compatible with one another.

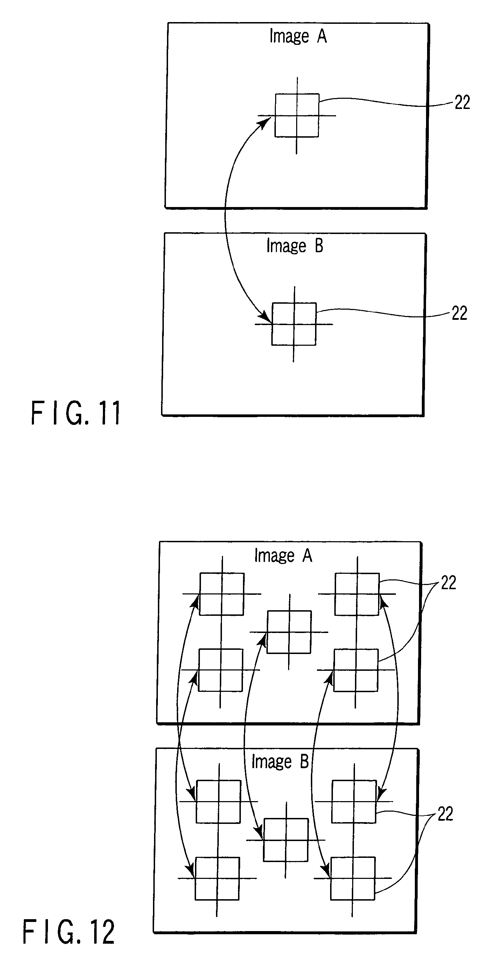

Further, the retrieval result incorporating the consideration of the attention region for the photographer can be obtained. More specifically, ordinarily, the photographer acquires an image of a main photographic subject by capturing it in the center of the imaging area. Therefore, as shown in FIG. 11, the detail templates 22 with attention drawn to the center of the image data are used to obtain a good retrieval result. Accordingly, in the system in which original image data is retrieved and extracted from retrieval source printout 1, which is the printed out photograph, and copying thereof is easily performed, the effectiveness is high in retrieval of the printed photograph.

Further, in retrieval from an original image population for which keyword classification and the like are difficult, the effectiveness as means for performing high speed determination of small differences is high. That is, the retrieval result can be narrowed down in a stepwise manner with respect to a large population.

Further, the detail template 22 is not limited to that as shown in, for example, FIG. 3 or 11, which draws attention to the central portion.

For example, as shown in FIG. 12, detail templates 22 can be set in several portions of the image.
Failure due to a print-imaging condition can be prevented by thus distributively disposing detail templates 22. Thereby, convergence can be implemented by dynamically varying, for example, the positions and the number of detail templates.

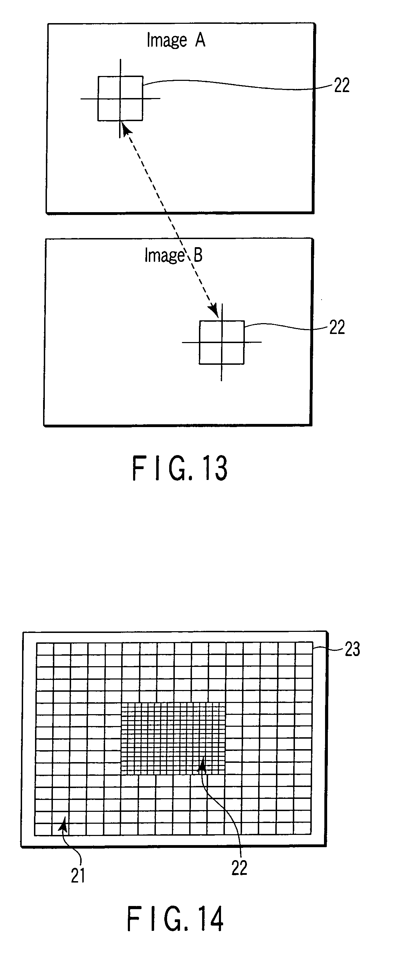

Further, as shown in FIG. 13, the detail template 22 may be such that an attention region can be placed in a focus position in the event of acquiring an original image. With such detail template 22, a result reflecting the intention of a photographer can be expected.

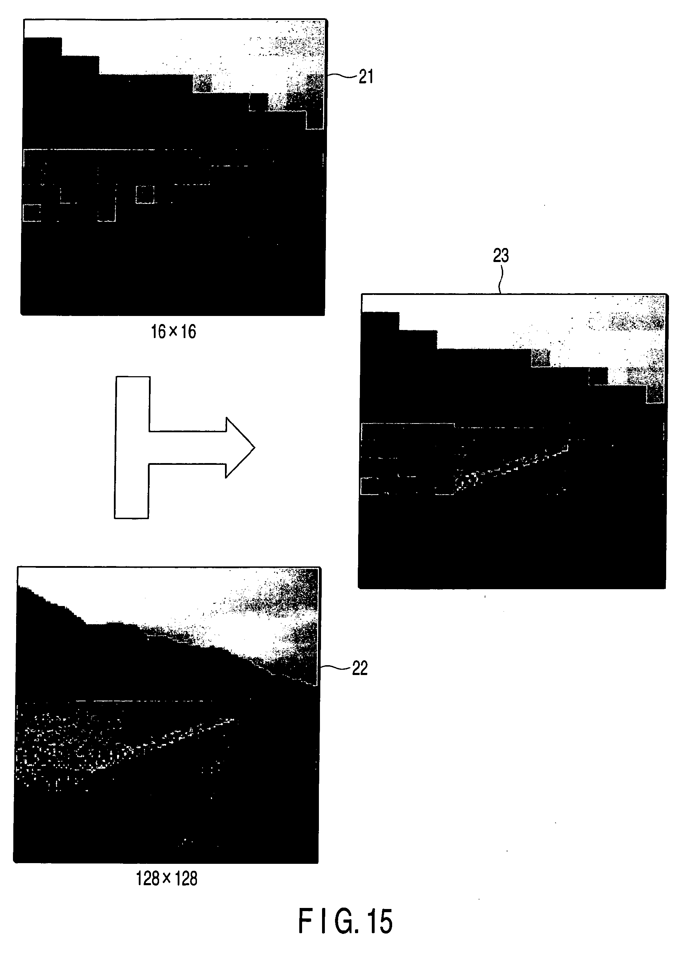

As is shown in FIG. 14, a composite template 23, in which a low-resolution outline template 21 and a high-resolution detail template 22 are included in the same image, may be constructed and, a template matching process may be executed only once. For example, as shown in FIG. 15, an outline template 21 (16 × 16 template) and a detail template 22 (128 × 128 template) are combined to form a composite template 23. According to this composite template 23, both a high speed and a stable retrieval result can be achieved.
In addition, even if the arrangement and structure of the high-resolution region are altered, the entire configuration can be handled without alteration.

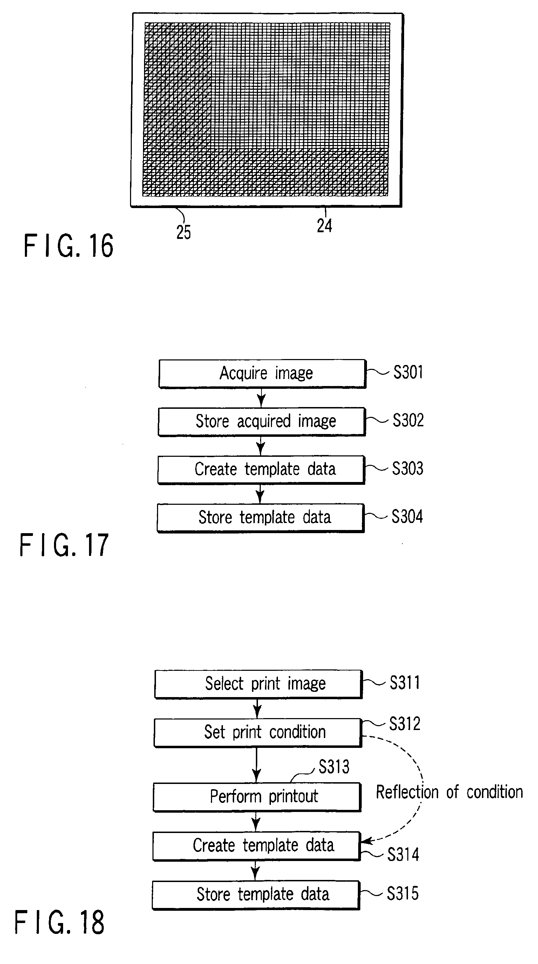

Further, as shown in FIG. 16, a detail template 22 may be created with respect to the same region as an outline template 21 and may be registered in the database. At the time of template matching with an actual detail template 22, a part of the region, that is, a region as shown in FIG. 11 to FIG. 13, may be used as a reference region 24, and the other region may be used as a non-reference region 25.

The detail feature value database in which the detail templates 22 are registered and the total feature value database in which the outline templates 21 are registered need to be created in advance on the basis of the original image data in the storage 20. The storage 20 may be a memory which is attached to the digital camera 10, or may be a database which is accessible via a communication unit as indicated by a broken line in FIG. 2.

Various methods are thinkable in order to create these feature value databases.

For example, in one method, when acquired image data is stored in the memory area of the digital camera 10 at the time of original image acquisition, the feature values are calculated and registered in the databases. Specifically, as shown in FIG. 17, image acquisition is executed by the digital camera 10 (step S301). The acquired image data is stored in the memory area of the digital camera 10 (step S302). From the stored acquired image data, feature values are calculated with two kinds of resolutions (and positions), and both template data are created (step S303). The created template data are stored in the respective databases in association with the acquired image data (step S304). Accordingly, if the storage 20 is the memory that is built in the digital camera 10, the databases can be constructed. In the case where the storage 20 is separate from the digital camera 10, both the acquired image data and template data, which are stored in the memory area of the digital camera 10, are transferred to the storage 20, and the databases are constructed.

In another method which is efficient in terms of processing, when original image data, which is stored in the storage 20, is to be printed out by the printer 30, a feature value extraction process is executed at the same time as the printout instruction, and the feature values are stored in the databases. Specifically, as shown in FIG. 18, when original image data that is stored in the storage 20 is to be printed out, the original image data to be printed out is, in usual cases, selected by the user's instruction (step S311) and also the print condition is set (step S312). The printout is thus executed (step S313). Normally, the print process is finished here. In the present example, furthermore, the feature values are calculated from the selected original image data with the respective resolutions (and positions) and both template data are created (step S314), and the created template data are stored in the databases in association with the original image data (step S315). By reflecting the print condition on the creation of the template data, the precision in matching between the retrieval source printout 1 and template data can be improved. According to this method, template data are created with respect to only the original image data for which the matching process may be executed. Therefore, the creation time and storage capacity for unnecessary template data can be saved.

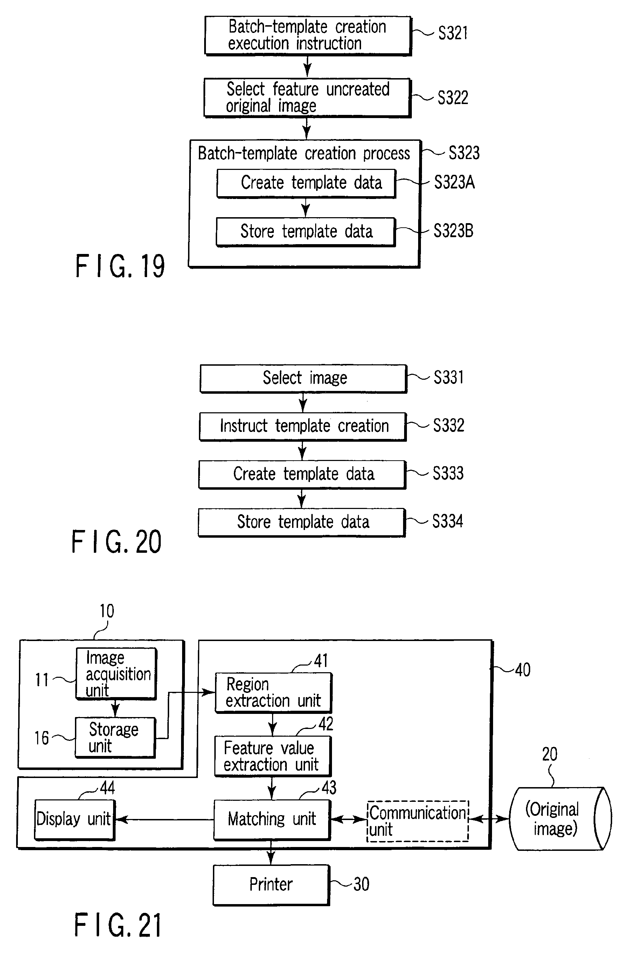

Needless to say, a batch process may be executed. Specifically, as shown in FIG. 19, when a batch-template creation execution instruction is issued by the user (step S321), original image data for which templates are not created are selected from the storage 20 (step S322), and a batch-template creation process is executed on the selected original image data for which templates are not created (step S323). In the batch-template creation process, feature values are extracted from the respective original image data for which templates are not created, with respective resolutions (and positions), and both template data are created (step S323A). The created template data are stored in the storage 20 in association with the corresponding original image data (step S323B).

Alternatively, the original image data may be processed individually by the input of the user's instruction. Specifically, as shown in FIG. 20, the user selects one of the original image data in the storage 20 (step S331), and instructs creation of template data for the selected original image data (step S332). Thereby, feature values are extracted from the selected image data with respective resolutions (and positions), and both template data are created (step S333). The created template data are stored in the storage 20 in association with the selected original image data (step S334).

It is not necessary that both templates be created at the same time. For example, the detail template 22 may be created when it is needed at the stage of executing a secondary search.

The process of steps S12 to S20 has been described as being executed in the digital camera 10. In the case where the storage 20 is provided separately from the digital camera 10, the actual operation can be performed by executing the process, as software, in the storage 20, or by executing the process in both the digital camera 10 and storage 20 in a divided manner.

As has been described above, when image data, which has already been printed out, is to be printed once again, the user, in many cases, retrieves the image data with reference to related information (file name, date of image acquisition, etc.) of the image data. According to the retrieval system of the present embodiment, the file (image data) of the original image can be accessed by simply acquiring the image of the desired retrieval source printout 1 by the digital camera 10. Thus, it becomes possible to provide a retrieval method which enables intuitive search and is efficient in use for the user.

In addition, not only the original image data itself but also image data of similar image structure can be retrieved, and a novel use, though a secondary one, can be provided. Specifically, an image of a sign board, a poster, etc. on the street may be acquired in this so-called retrieval mode, and similar or same image data can easily be retrieved from the image data and feature value data thereof that are present in the memory attached to the digital camera 10 or the storage 20, such as a database, which is accessible via the communication unit shown by a broken line in FIG. 5.

According to the present embodiment, as described above, both the quality (degree of satisfaction) of the retrieval result of original image data and the proper retrieval time can be achieved.

Furthermore, a retrieval result, in which the photographer's region of interest is considered, can be obtained.

High effectiveness is obtained as the means for quickly discriminating a difference in fine parts in the search through the population of original images which are difficult to classify by keywords, etc. In short, stepwise narrowing-down of search results through a large population is enabled.

### [Second Embodiment]

An outline of a retrieval system of a second embodiment of the present invention will be described herebelow with reference to FIG. 1.

The retrieval system includes a digital camera 10, a storage 20, a printer 30, and a personal computer (PC) 40. The storage 20 is a storage device built in the PC 40 or accessible by the PC 40 through communication. The PC 40 is wired/wireless connected to the digital camera 10, or alternatively is configured to permit a memory detached from the digital camera 10 to be attached, thereby being able to read image data stored in the memory of the digital camera 10.

The retrieval system thus configured performs operation as follows.
(1) First, the digital camera 10 acquires an image of a photographic subject including a retrieval source printout 1 once printed out by the printer 30.
(5) The PC 40 extracts a region corresponding to the image of the retrieval source printout 1 from the image data acquired, and then extracts a feature value of the extracted region.
(6) The PC 40 executes, on the basis of the extracted feature value, a template matching process with the outline template 21 and detail template 22 which are stored in the storage 20.
(7) As a consequence, the PC 40 reads image data corresponding to matched template as original image data of the retrieval source printout 1 from the storage 20.
(8) Thereby, the PC 40 is able to again print out the read original image data by the printer 30.

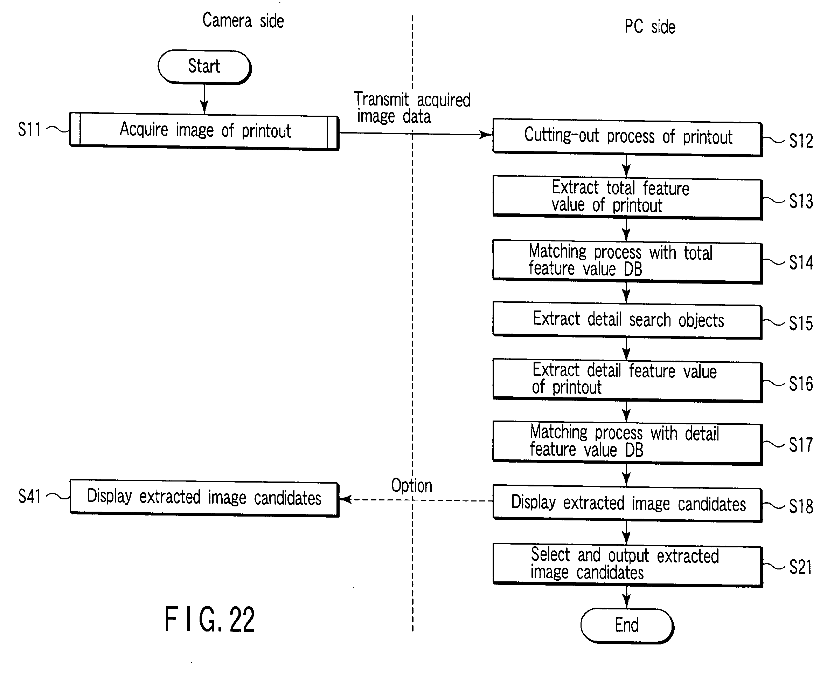

The retrieval system of the second embodiment will be described in more detail with reference to a block diagram of configuration shown in FIG. 21 and an operational flowchart shown in FIG. 22. In these figures, the same reference numerals designate the portions corresponding to those of the first embodiment.

The present embodiment contemplates a case where image data acquired by the digital camera 10 is stored into the storage 20 built in or connected to the PC 40 designated by a user, and a process shown on the PC side in FIG. 22 operates in the PC 40 in the form of application software. The application software is activated in the state that the PC 40 and the digital camera 10 are hard wired or wirelessly connected together thereby to establish a communication state. The state may be such that functional activation is carried out through the operation of tuning on a switch such as a "retrieval mode" set for the digital camera 10.

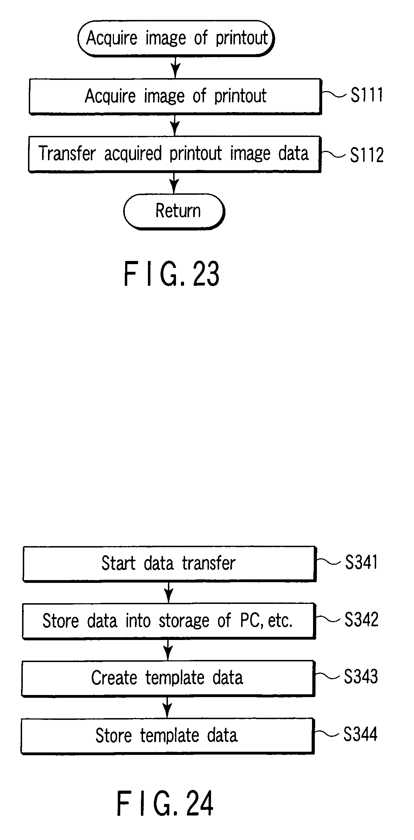

With the application software having thus started the operation, an image acquisition process for acquiring an image of a printout is executed on the side of the digital camera 10 (step S11). More specifically, as shown in FIG. 23, a user operates an image acquisition unit 154 of the digital camera 10 to acquire an image of a retrieval source printout 1 desired to be again printed out in the state where it is pasted onto, for example, a table or a wall face so that at least no omission of the retrieval source printout 1 occurs (step S111). Thereby, acquired image data is stored into a storage unit 176 serving as a memory of the digital camera 10. Then, the acquired image data thus stored is transferred to the PC 40 hard wired or wirelessly connected (step S112).

Then, in the PC 40, a region extraction unit 41, which is realized by the application software, executes a printout cutting-out process for specifying an image of the retrieval source printout 1 from the transmitted acquired image data, and specifying/extracting this image part (step S12). Next, a feature value extraction unit 42, which is realized by the application software, executes a total feature value extraction process of extracting a feature value from the specified/extracted region of interest (step S13).

Subsequently, a matching unit 43, which is realized by the application software, executes a matching process with the total feature value DB for comparing the extracted total feature value data with the total feature value database which is constructed in the storage 20 and in which the outline templates 21 are registered, and successively extracting data with high similarity (step S14). Specifically, on the basis of the calculated total feature value data, the matching unit 43 of the PC 40 side executes comparison with the feature value data (outline templates 21) which are attached to the image data in the storage 20 (or comprehensively incorporated in the database), and selects most similar data. It is also effective in usability to set such that a plurality of most similar feature value candidates is selected. The feature value data includes specification information of original image data from which the feature value have been calculated, and candidate images are called in accordance with the specification information.

Then, the region extraction unit 41 extracts, as detail search object image data, image data of a detail search object region, that is, a central region of the region of interest in this example, from the image data of the above-described specified/extracted entire region of interest (step S15). The feature value extraction unit 42 executes a detail feature value extraction process for extracting a feature value from the detail search object image data that is extracted by the region extraction unit 41 (step S16). The matching unit 43 compares the extracted detail feature value data with the detail feature value database which is constructed in the storage 20 and in which the detail templates 22 are registered, and successively extracts data with high similarity (step S17). In this case, however, template matching is not executed with all the detail templates 22 registered in the detail feature value database. The template matching is executed only with detail templates 22 corresponding to a plurality of original image candidates which are extracted by the matching process with the total feature value DB in step S14. Thus, it should suffice to execute only a minimum necessary amount of the template matching process with the detail templates 22, which requires a length of process time because of high resolution.

Thereafter, the image data of the selected original image candidates (or candidate images) are read out of the storage 20, and displayed, as image candidates to be extracted, on a display unit 44 which is the display of the PC 40 (step S18) and, like the above-described first embodiment, the selection by the user is accepted. In this case, the processing may be such that the selected original image candidates (or the candidate images) are transferred as they are or in appropriately compressed states from the PC 40 to the digital camera 10, and are displayed on the display unit 15 of the digital camera 10 (step S41).

Then, in response to a selection performed through the operation of a mouse or the like, original image data corresponding to the image candidate stored in the storage 20 is sent to the connected printer 30 and is printed thereby (step S21). More specifically, the displayed original image candidate is determined through determination of the user and is passed to the printing process, thereby to enable the user to easily perform the preliminarily desired reprinting of already-printed image data. In this event, not only printing is simply done, but also the plurality of selected candidate images result in a state that "although different from the desired original image, similar images have been collected", depending on the user's determination, thereby realizing the function of batch retrieval of similar image data.

In the present embodiment, the feature value DB can be created in the event of transfer of the acquired image data from the digital camera 10 to the storage 20 through the PC 40. Specifically, as shown in FIG. 24, the transfer of acquired image data from the digital camera 10 to the PC 40 is started (step S341). The PC 40 stores the transferred acquired image data into the storage 20 (step S342) and creates outline template data and detail template data from the acquired image data (step S343). The created template data are stored in the storage 20 in association with the acquired image data (step S344).

As has been described above, in the second embodiment, the same advantageous effect as with the first embodiment can be obtained.

Further, not only the original image data itself, but also image data similar in image configuration can be retrieved, thereby making it possible to provide novel secondary adaptabilities. More specifically, an image of a signboard or poster on the street, for example, is acquired in a so-called retrieval mode such as described above. In this case, image data similar or identical to the acquired image data can easily be retrieved from image data and feature values data thereof existing in the storage 20, such as a database, accessible through, for example, the memory attached to the digital camera 10 and a communication unit shown by the broken line in FIG. 5. Further, Internet sites associated to the data can be displayed on the displays of, for example, the PC 40 and digital camera, and specific applications (for audio and motion images (movies), for example) can be operated.

The function of retrieving image data of similar image structure may be a guidance to an exemplar image at the time of image acquisition. The reason is that the entire picture composition can be evaluated on the basis of the outline template 21, fine parts can be evaluated on the basis of the detail template 22, and guidance information or an image of a preferable picture composition can be selected.

This function may be implemented by a method of executing an off-line process on the PC 40 or a method of executing an on-line process with the function incorporated in an image acquisition apparatus such as digital camera 10 or a mobile information terminal. The off-line process on the PC 40 is applicable, for example, to such a use that an image of a preferable picture composition is selected from a great number of acquired images. In the case where this function is incorporated in the digital camera 10 or mobile information terminal, this function operates as an auxiliary function of image acquisition and, for example, this function supports the image acquisition in real time.

The exemplar images used in this function are preferable images (exemplar images) such as images chosen in photo contests or images taken by professional cameramen, and may be chosen according to the user's preference.

Not only the feature values but also the time, position information, weather information, etc. may be added to templates of exemplar images. Using such information, it becomes possible, for example, to instruct a time range in which an optimal picture composition is obtained, in consideration of the time of sunset at the location for image acquisition. In the case of a lens-replaceable camera, it is possible to implement such a function as automatic selection or correction of exemplar image templates on the basis of the information of the replaced lenses.

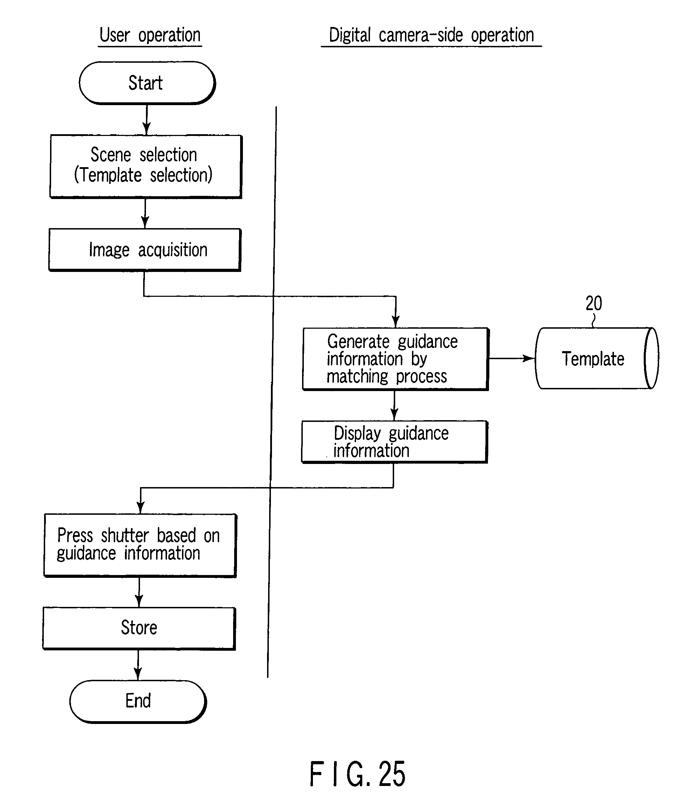

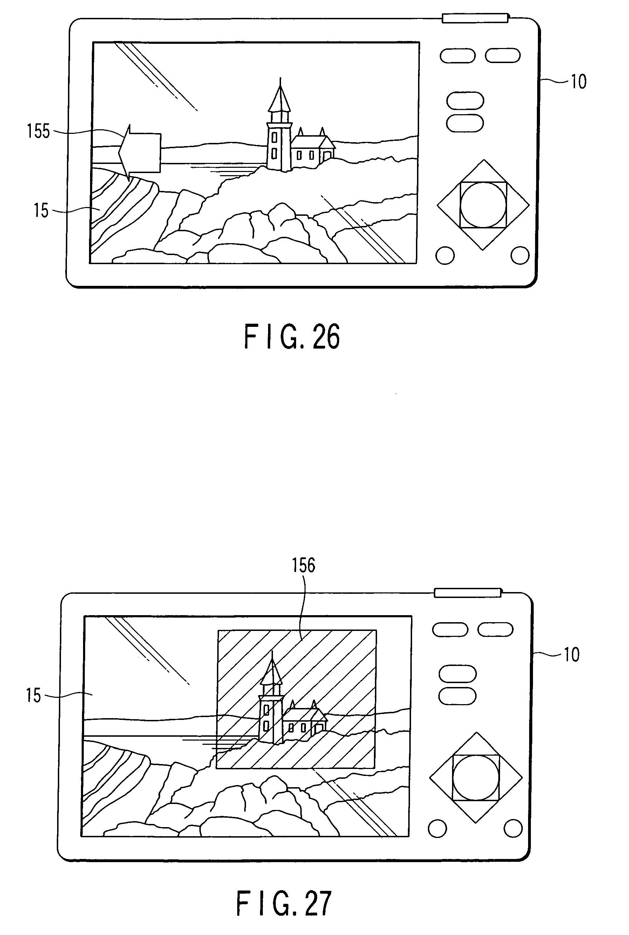

FIG. 25 shows an example in which the guidance function for guidance to an exemplar image at the time of, e.g. image acquisition is applied to the digital camera 10. In this example, the exemplar image is stored as templates in the storage 20. At the time of image acquisition, matching with the exemplar image template is executed, and guidance is performed so as to enable acquisition of image with high similarity, thereby supporting acquisition of image with optimal picture composition. An error from the exemplar image is detected by the matching, and guidance is performed so as to obtain a preferable picture composition, for example, by an arrow 155 as shown in FIG. 26, or so as to execute emphasis display 156 of a part with preferable picture composition as shown in FIG. 27.

It is possible to use, as the feature value at the time of guidance, the positional relationship of feature points or color information in the image data, the relative density of divisional areas in the image data according to a predetermined rule, that is, the relative density of small regions divided by a predetermined lattice, or Fourier transform values of respective divisional areas.

In the above description, the digital camera 10 is used. However, the present embodiment is not limited to this example, and a scanner may be used.

Although an image of the retrieval source printout 1, which is actually printed out, is acquired by the digital camera 10, the embodiment can similarly be carried out even when the display, which displays the acquired image of the retrieval source printout 1, is photographed by the digital camera 10.

### [Third Embodiment]

A retrieval system of a third embodiment will be described herebelow.

The retrieval system of the present embodiment is an example using a digital camera 10 including communication function which is an image acquiring function mounted communication device such as a camera mobile phone. The embodiment is adapted in the case where a preliminarily registered image is acquired to thereby recognize the image, and a predetermined operation (for example, activation of an audio output or predetermined program, or displaying of a predetermined URL) is executed in accordance with the recognition result.

When an image is recognized, while image data is registered as a reference database (so-called dictionary data), it is more efficient and practical to compare the feature values of images than to compare the images as they are, such that a feature value database extracted from images is used. The database can be of a built-in type or a type existing in the server through communication.

In the present embodiment, an arrangement relationship of feature points of an image is calculated as a combination of vector quantities, and a multigroup thereof is defined to be the feature value. In this event, the feature value is different in accuracy depending on the number of feature points, such that as the fineness of original image data is higher, a proportionally larger number of feature points are detectable. As such, for the original image data, the feature value is calculated under a condition of a highest-possible fineness. In this event, when the feature value is calculated for the same image element in accordance with image data with a reduced fineness, the number of feature points is relatively small, such that the feature value itself has a small capacity. In the case of a small capacity, while the matching accuracy is low, advantages are produced in that, for example, the matching speed is high, and the communication speed is high.

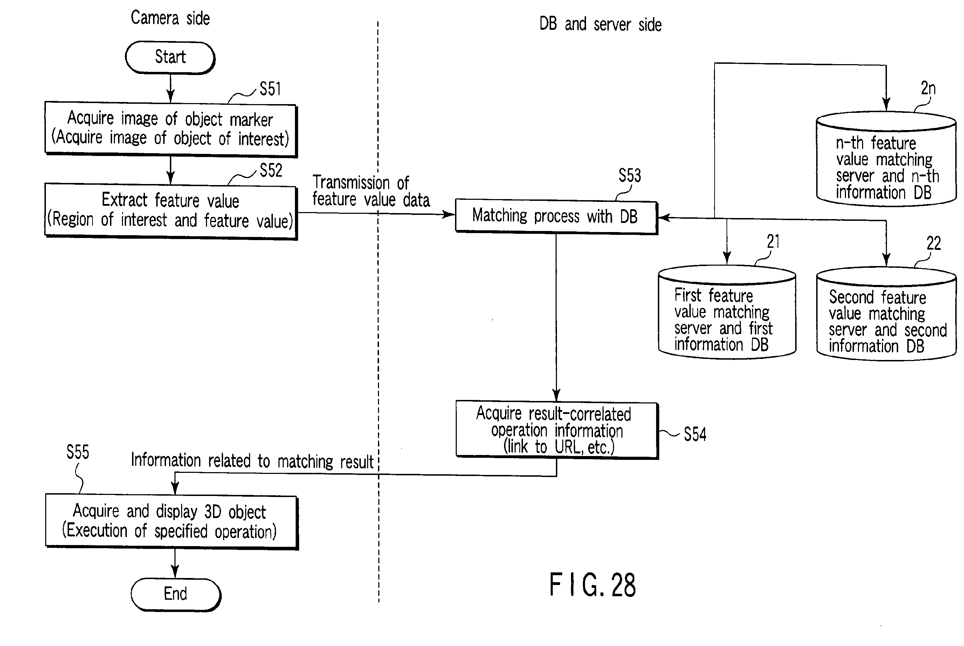

In the present embodiment, attention is drawn on the above-described. More specifically, in the event of registration of image data as reference data (template), when one image element is registered, the feature value is calculated from a plurality of different finenesses, thereby to configure databases specialized corresponding to the respective finenesses. Corresponding matching servers are connected to the respective databases and arranged to be capable of providing parallel operation. More specifically, as shown in FIG. 28, a first feature value matching server and first information DB 21, a second feature value matching server and second information DB 22, ..., and an n-th feature value matching server and n-th information DB 2n are prepared. The second feature value matching server and second information DB 22 to the n-th feature value matching server and n-th information DB 2n are each a database having feature values with higher fineness or in a special category in comparison to the first feature value matching server and first information DB 21.

With the matching process system thus prepared, as shown in FIG. 28, an image of a design (object) already registered is acquired by the communication function mounted digital camera 10 (step S51). Then, feature value data is calculated from the arrangement relationship of the feature points by application software built in the digital camera 10 (step S52). Then, the feature value data is transmitted to the respective matching servers through communication, whereby matching process with the respective DBs is carried out (step S53). In the event that a matching result is obtained by the matching process, then operation information (such as a URL link) correlated to the result is obtained (step S54), and the operation information is transmitted to the digital camera 10, whereby a specified operation, such as displaying of 3D object acquirement, is performed (step S55).

In this event, suppose that the camera resolution is about two million pixels. In this case, also when performing retrieval in the matching server through communication, if matching is performed by using data from a feature value DB having a resolution of about two million pixels, an erroneous-recognition ratio is low. However, matching in a concurrently operating feature value DB with a low resolution (VGA class resolution, for example) is responsive at high speed, and thus the result is transmitted earlier to the digital camera 10. It is advantageous in speed and recognition accuracy to thus parallel arrange the matching servers corresponding to the resolutions. However, a case can occur in which a response (result) from the followingly operating high-resolution matching server is different from an already-output result of the low-resolution matching server. In such a case, displaying in accordance with the earlier result is first carried out, and then it is updated to a display in accordance with the following result. In the event of recognition of, for example, a banknote, although the result in the low resolution matching is a level of "¥10000 note", a more detailed or proper result, such as "¥10000 note with the number ZTA473298SPK", due to the higher fineness can be obtained in the high resolution matching.

In addition, as described above, the capacity of the feature value itself is large in the high resolution matching server. A feature value in an XGA class increases to about 40 kB; however, the capacity is reduced to about 10 kB by preliminary low resolution matching. Further, in the second or higher matching server and database, when only a difference from a lower low resolution database is retained, a smaller database configuration is realized. This leads to an increase in the speed of the recognition process. It has been verified that, when extraction with template (method in which area allocation is carried out, and respective density values are compared) is advanced for feature value, the feature value is generally 10 kB or lower, and also multidimensional feature values obtained by combining the two methods appropriately are useful to improve the recognition accuracy.

As described above, the method in which the resolution of some or entirety of the acquired image surface is divided into multiple resolutions to thereby realize substantial matching hierarchization is effective in both recognition speed and recognition accuracy in comparison with the case in which a plurality of matching servers are simply distributed in a clustered manner.

Especially, the above-described method is a method effective in the case that the number of images preliminarily registered into a database is very large (1000 or larger), and is effective in the case that images with high similarity are included therein.

The present invention has been described on the basis of the embodiments. However, the invention is not limited to the above-described embodiments and, needless to say, various modifications and applications may be made without departing from the spirit of the invention.

For example, the digital cameras are not limited to digital still cameras for acquiring still images, and may include digital movie cameras which capture motion video.

The image acquisition function-equipped communication devices, which are digital cameras having communication functions, include camera-equipped mobile phones, camera-equipped PHS and stationary TV phones.

### Industrial Applicability

The present invention is widely applicable to not only camera-equipped mobile phones and digital cameras, but also systems which generally acquire and store digital images by cameras, such as a security system of the type in which authentication is executed by images.

## Claims

1. A retrieval system **characterized by** comprising:
image input means (11) for inputting an image; and
image retrieval means (14; 43) for retrieving, on the basis of the image input by the image input means, a plurality of images from a database (20) by template matching using a first template (21), and retrieving a single or a plurality of images from the retrieved plurality of images by template matching by using a second template (22) having a narrower region than the first template and a high resolution.

2. The retrieval system according to claim 1, **characterized in that** in the image retrieval means the second template corresponds to a central region part of the image.

3. The retrieval system according to claim 1, **characterized in that** in the image retrieval means the second template corresponds to a plurality of region parts of the image.

4. The retrieval system according to claim 1, **characterized in that** in the image retrieval means the second template corresponds to an in-focus region part of the image.

5. A retrieval system **characterized by** comprising:
image input means (11) for inputting an image; and
image retrieval means (14; 43) for retrieving, on the basis of the image input by the image input means, a single or a plurality of images from a database (20) by template matching using a template (23) with a partly enhanced resolution.

6. The retrieval system according to claim 5, **characterized in that** in the image retrieval means a region with the partly enhanced resolution in the template corresponds to a central region part of the image.

7. The retrieval system according to claim 5, **characterized in that** in the image retrieval means a region with the partly enhanced resolution in the template corresponds to a plurality of region parts of the image.

8. The retrieval system according to claim 5, **characterized in that** in the image retrieval means a region with the partly enhanced resolution in the template corresponds to an in-focus region part of the image.

9. The retrieval system according to claim 1 or 5, **characterized in that** in the image retrieval means the image which is input by the image input means is an image obtained by image acquisition of a printed-out image (1).

10. A retrieval method **characterized by** comprising:
inputting an image; and
retrieving, on the basis of the input mage, a plurality of images from a database by template matching using a first template (21); and
retrieving a single or a plurality of images from the retrieved plurality of images by template matching by using a second template (22) having a narrower region than the first template and a high resolution.

11. The retrieval method according to claim 10, **characterized in that** the first and second templates (21, 22) are created on the basis of images which are preferable as exemplars, and
a preferable image or images are selected as the retrieved single or plurality of images.

12. A retrieval method **characterized by** comprising:
inputting an image; and
retrieving, on the basis of the input image, a single or a plurality of images from a database by template matching using a template (23) with a partly enhanced resolution.
